# EUROPÄISCHE PATENTSCHRIFT

(11) **EP 0 972 361 B1**
(45) Veröffentlichungstag und Bekanntmachung des Hinweises auf die Patenterteilung: **22.08.2007**
(21) Anmeldenummer: 98914816.8
(22) Anmeldetag: 24.02.1998
(51) Int. Cl.: H04B 7/08, H04Q 7/32

(54) **VERFAHREN UND ANORDNUNG ZUR ÜBERTRAGUNG VON DATEN**
METHOD AND DEVICE FOR DATA TRANSMISSION
PROCEDE ET DISPOSITIF POUR TRANSMETTRE DES DONNEES

(30) Priorität: 27.03.1997 DE 19713061
(43) Veröffentlichungstag der Anmeldung: 19.01.2000
(73) Patentinhaber: SIEMENS AKTIENGESELLSCHAFT, 80333 München (DE)
(72) Erfinder: HOFMANN, Ludwig, D-85304 Ilmmünster (DE)
(86) Internationale Anmeldenummer: PCT/DE1998/000550
(87) Internationale Veröffentlichungsnummer: WO 1998/044750

(56) Entgegenhaltungen:
- GB-A- 2 281 478
- US-A- 5 117 236
- US-A- 5 481 571
- US-A- 5 625 874

## Beschreibung

Die Erfindung bezieht sich auf ein Verfahren zur Übertragung von Daten, sowie auf eine Anordnung zur Durchführung des Verfahrens. Der Begriff "Daten" bezieht sich im Rahmen dieser Anmeldung auch auf Sprachdaten. Der Begriff "Übertragung" umfaßt die Vorgänge beim Senden und Empfangen.

Viele Mobilfunksysteme wie beispielsweise das paneuropäische Mobilfunksystem GSM benützen eine Kombination der Vielfachzugriffsverfahren Frequenzmultiplex (Frequency Division Multiple Access - FDMA) und Zeitmultiplex (Time Division Multiple Access - TDMA), wobei jeweils ein Funkfrequenzkanal in Rahmen von 8 Zeitschlitzen aufgeteilt wird und während der unterschiedlichen Zeitschlitze Nutz- oder Steuerdaten von in der Regel unterschiedlichen Teilnehmern übertragen werden. Üblicherweise werden insbesondere bei Telefoniebetrieb einer Verbindung jeweils zum Senden und zum Empfangen ein Zeitschlitz eines Rahmens zugeordnet.

Insbesondere kann man zwischen den Vorgängen des Sendens, Empfangens und der Nachbarzellenbeobachtung unterscheiden, die üblicherweise jeweils in unterschiedlichen Zeitschlitzen durchgeführt werden. Dadurch ist es möglich zum Senden und Empfangen eine gemeinsame Antenne zu verwenden, die je nach Zeitschlitz durch einen Umschalter mit dem Sende- oder Empfangsteil verbunden wird.

Nachbarzellenbeobachtung bedeutet, daß innerhalb eines aus mehreren Zellen bestehenden Funknetzes (zellulares Netz) von dem Kommunikationsendgerät (insbesondere Mobilstation) während einer bestehenden Verbindung nicht nur die Empfangsqualität der Funksignale der momentan der Verbindung zugeordneten Basisstation, sondern auch die Empfangsqualitäten der Funksignale der Basisstationen der Nachbarzellen ermittelt werden (Nachbarzellenbeobachtung).

Stellt sich heraus, daß die Empfangsqualität der Funksignale der Basisstationen einer Nachbarzelle besser ist als die der momentan der Verbindung zugeordneten Basisstation, so wird die Verbindung in der Regel auf diese Basisstation der Nachbarzelle umgeschaltet (Handover). Da diese Vorgänge des Empfangens und der Nachbarzellenbeobachtung in der Regel in unterschiedlichen Zeitschlitzen erfolgt, können die zwei Vorgänge auf einfache Weise mit einem Empfangsteil und insbesodere mit einem Oszillator bzw. Synthesizer durchgeführt werden, obwohl sie in unterschiedlichen Frequenzbereichen (benachbarte Zellen verwenden aus Interferenzgründen üblicherweise unterschiedliche Frequenzen) erfolgen.

Um nun basierend auf einem derartigen System höhere Datenraten zu übertragen, ist es möglich, einer Verbindung zum Senden und/oder Empfangen mehrere Zeitschlitze zuzuordnen. Dies kann allerdings bei sehr hohen Datenraten dazu führen, daß das Kommunikationsendgerät in allen 8 Zeitschlitzen entweder sendet oder empfängt. Dadurch kann keine Nachbarzellenbeobachtung mehr durchgeführt werden, da diese nur in Zeitschlitzen stattfinden kann, in denen weder gesendet noch empfangen wird.

Wird die Datenrate weiter erhöht, so ist es sogar nötig, gleichzeitig zu senden und zu empfangen und noch die Nachbarzellenbeobachtung durchzuführen. Auch dies ist mit den bisher bekannten Verfahren und Anordnungen nicht möglich.

Aus dem Dokument JP-A-00 184251 (das der vor-veröffentlichen US-A-5 625 874 entspricht) ist bereits eine Funkstation mit zwei Empfangsteilen bekannt, die in zwei unterschiedlichen Funksystemen mit unterschiedlichen Modulationsverfahren und Bereichen ("main service area", "supplementary service area") betrieben werden. Dieses Dokument betrifft jedoch kein zellulares Mobilfunksystem, in der eine Nachbarzellenbeobachtung durchgeführt wird.

Der Erfindung liegt daher die Aufgabe zugrunde, ein Verfahren und eine Anordnung zur Durchführung des Verfahrens anzugeben, mit denen es möglich ist in zellularen Netzen, in denen eine Nachbarzellenbeobachtung durchgeführt wird, mit möglichst geringem Aufwand hohe Datenraten zu übertragen.

Diese Aufgabe wird durch ein Verfahren mit Merkmalen nach Anspruch 1 gelöst. Dabei werden zum Senden und Empfangen von Daten in zellularen Funknetzen, in denen vom Kommunikationsendgerät üblicherweise eine Nachbarzellenbeobachtung durchgeführt wird, die Funksignale (FA) der momentan der Verbindung zugeordneten Basisstation (BSA) durch einen Empfangsteil (EA) eines Kommunikationsendgerätes (KE) verarbeitet, und die Funksignale (FB) von den Basisstationen (BSB) der Nachbarzellen (NZ) zumindest zeitweise durch einen anderen Empfangsteil (EB) des Kommunikationsendgerätes (KE) verarbeitet.

Die Erfindung beruht demnach auf dem Gedanken, die Funksignale (FB) von den Basisstationen (BSB) der Nachbarzellen(NZ) durch einen für diesen Zweck vorgesehenen zweiten Empfangsteil (EB) zu verarbeiten und zwar zumindest dann, wenn aufgrund zu hoher Datenraten die Funksignale (FB) von den Basisstationen (BSB) der Nachbarzellen nicht mehr durch den Empfangsteil (EA) verarbeitet werden können.

Je nach Realisierung der Empfangsteile (EA, EB) und des nachfolgenden Signalverarbeitungsteils (SV, SVD) durch einen Fachmann, kann das Empfangsteil dabei unterschiedliche Baugruppen. In jedem Fall basiert die Verarbeitung innerhalb der der beiden Empfangsteile (EA, EB) auf einem eigenen Oszillator (VCO1, VCO2).

Durch die Erfindung wird erreicht, daß die Funksignale (FB) von den Basisstationen (BSB) der Nachbarzellen (Nachbarzellenbeobachtung) während (auch während der gleichen Zeitschlitze) des Empfangens von Funksignalen (FA) der momentan der Verbindung zugeordneten Basisstation (BSA) möglich ist, obwohl die Funkssignale (FA) in einem anderen Frequenzbereich als die Funksignale (FB) liegen.

Bei einem bevorzugten Ausführungsbeispiel der Erfindung werden die Sende- und Empfangssignale des Kommunikationsendgerätes über eine gemeinsame Antenne (A1) übertragen und durch eine der Antenne (A1) nachgeschaltete Sende / Empfangsweiche (SE) voneinander getrennt.

Durch die Verwendung einer Sende / Empfangsweiche (SE) wird erreicht, daß je nach Frequenzbereich der Signale eine Eingangsselektion durchgeführt wird und dadurch gleichzeitig über eine Antenne (A1) gesendet und empfangen werden kann, ohne Beinflußung der Sendesignale durch die Empfangssignale und umgekehrt.

Eine bevorzugte Ausführungsform sieht vor, daß in Zeiträumen, in denen keine Nachbarzellenbeobachtung durchgeführt wird, die Funksignale (FA) von der momentan der Verbindung zugeordneten Basisstation (BSA) neben der Antenne (A1) auch durch die zusätzliche Antenne (A2) empfangen werden und so neben dem Empfangsteil (EA) auch durch den Empfangsteil (EB) verarbeitet werden, und eine weitere Signalverarbeitung auf der Basis des an sich bekannten Antennen-Diversityverfahrens durchgeführt wird.

Dadurch kann eine erhebliche Verbesserung in der Detektion der empfangenen Daten erreicht werden, d.h. die Bitfehlerrate kann bei gleichen Bedingungen durch das Antennen-Diversityverfahren erheblich reduziert werden.

Durch Einbringen der Erfindung in das Systemkonzept bestehender zellularer Mobilfunknetze wie GSM, ist es möglich durch geringe Modifikationen des Übertragungsprotokolls auf der Basis der bestehenden Strukturen die Übertragung höherer Datenraten zu ermöglichen.

Weiterbildungen der Erfindung ergeben sich aus den Unteransprüchen. Anordnungen zur Durchführung des Verfahrens sind in den Ansprüchen 4 bis 6 angegeben.

Zur Erläuterung der der Erfindung zugrundeliegenden Problemstellung und von Ausführungsformen der Erfindung dienen die nachstehend aufgelisteten Figuren.

Es zeigen:
FIG 1 eine schematische Darstellung des Umfeldes, in dem das erfindungsgemäße Verfahren durchgeführt werden kann.
FIG 2 eine schematische Darstellung eines erfindungsgemäßen Kommunikationsendgerätes.
FIG 3 eine schematische Darstellung einer Ausführungsvariante eines erfindungsgemäßen Kommunikationsendgerätes.

Die Erfindung wird im folgenden anhand bevorzugter Ausführungsbeispiele und mit Hilfe der Figuren näher beschrieben.

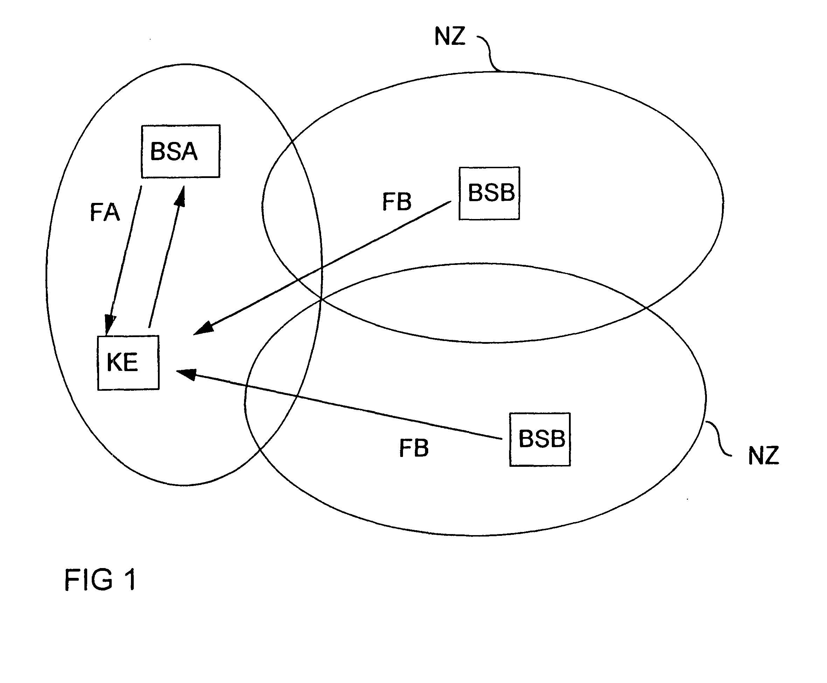

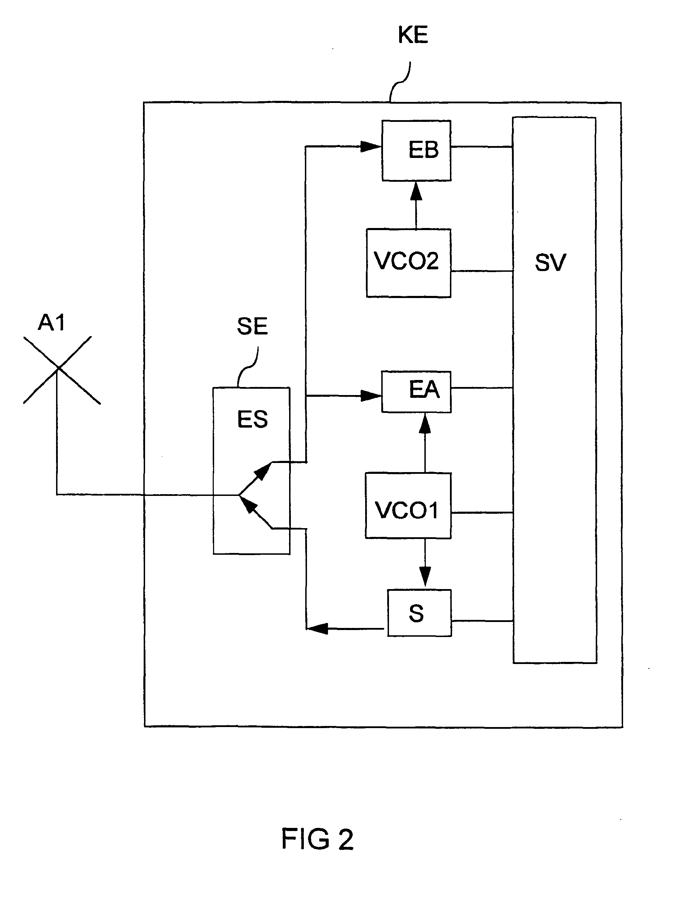

Wie in den Figuren 1 und 2 zu erkennen, werden die Funksignale (FA) der momentan der Verbindung zugeordneten Basisstation (BSA) durch einen Empfangsteil (EA) eines Kommunikationsendgerätes (KE) verarbeitet, und die Funksignale (FB) von den Basisstationen (BSB) der Nachbarzellen (NZ) durch einen anderen Empfangsteil (EB) des Kommunikationsendgerätes (KE) verarbeitet. Je nach Realisierung des Kommunikationsendgerätes (KE) sind in dem Empfangsteil (EA, EB) und dem Signalverarbeitungsteil (SV) unterschiedliche Baugruppen enthalten. In jedem Fall werden die Frequenzbereiche, in denen die beiden unterschiedlichen Empfangsteile (EA, EB) betrieben werden mit Hilfe zweier unterschiedlicher spannungsgesteuerter Oszillatoren (VCO1, VCO2) realisiert.

Die Sende- und Empfangssignale des Kommunikationsendgerätes werden über eine gemeinsame Antenne (A1) übertragen und durch eine der Antenne (A1) nachgeschaltete Sende / Empfangsweiche (SE) mit Hilfe einer Eingangsselektion (ES) voneinander getrennt. Diese Sende / Empfangsweiche (SE) verhindert durch Filter, daß sich eventuell gleichzeitig übertragene Sende- und Empfangssignale gegenseitig zu stark stören.

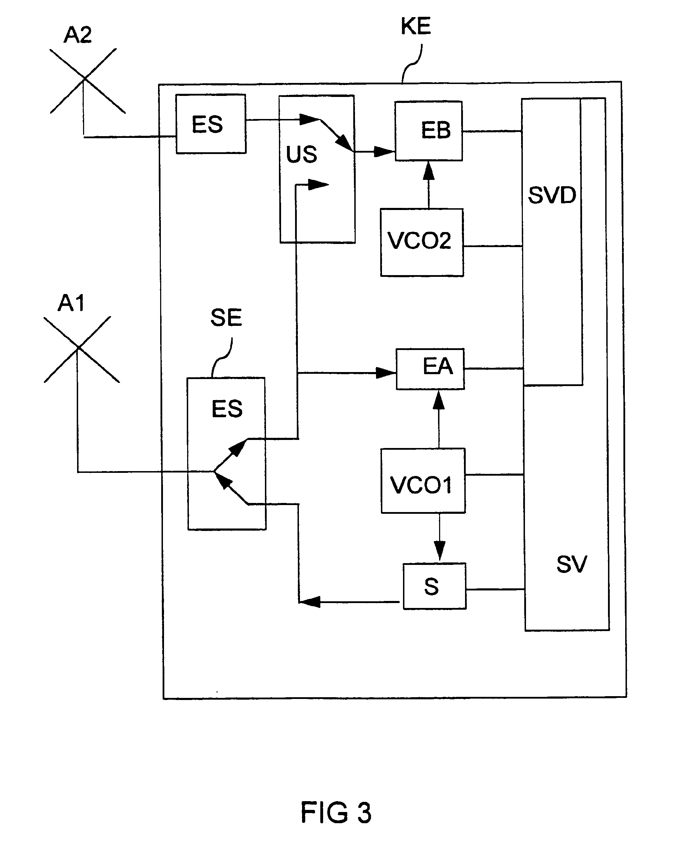

Eine andere Ausführungsvariante des erfindungsgemäßen Verfahrens sieht vor, daß wie in Figur 3 gezeigt, in den Zeiträumen, in denen keine Nachbarzellenbeobachtung durchgeführt wird, die Funksignale (FA) von der momentan der Verbindung zugeordneten Basisstation (BSA) durch eine zusätzliche Antenne (A2) empfangen und nach einer Eingangsselektion (ES) über einen Umschalter so auf den Empfangsteil (EB) geschaltet werden, daß sie durch diesen Empfangsteil (EB) weiterverarbeitet werden können. Darauf kann eine weitere Signalverarbeitung auf der Basis des Antennen-Diversityverfahrens durchgeführt wird. Dabei wird der Mehrfachempfang der Funksignale (FA) über die Antennen (A1, A2) genützt, um die Signale mit einer geringeren Fehlerrate zu detektieren.

Ein erfindungsgemäßes Kommunikationsendgerät (KE) zur Durchführung des Verfahrens ist mit einer Antenne (A1), einem Sendeteil (S), einem Empfangsteil (EA) zur Verarbeitung der Funksignale (FA) der momentan der Verbindung zugeordneten Basisstation (BSA), einem zweiten Empfangsteil (EB) zur Verarbeitung der Funksignale (FB) von den Basisstationen (BSB) der Nachbarzellen und einem Signalverarbeitungsteil (SV) versehen. Die unterschiedlichen Frequenzen, in denen die beiden Empfangsteile (EA, EB) betrieben werden, werden dabei mit Hilfe zweier unterschiedlicher spannungsgesteuerter Oszillatoren (VCO1, VCO2) realisiert.

Eine vorteilhafte Ausführungsform des erfindungsgemäßen Kommunikationsendgerätes ist in Figur 2 schematisch dargestellt und verfügt darüber hinaus über eine Sende / Empfangsweiche (SE) zur Trennung der Sende- und Empfangssignale des Kommunikationsendgerätes (KE) mit Hilfe einer Eingangsselektion (ES).

Eine weitere vorteilhafte Weitertbildung des erfindungsgemäßen Kommunikationsendgerätes ist in Figur 3 gezeigt. Es ist mit einer zusätzlichen Antenne (A2) versehen, die über eine Eingangsselektion (ES) und einen Umschalter (US) mit dem Empfangsteil (EB) verbunden werden kann. In einer besonders vorteilhaften Weiterbildung des erfindungsgemäßen Kommunikationsendgerätes ist ein Signalverarbeitungsteil zur weiteren Signalverarbeitung der Funksignale (FA), die in bestimmten Zeitschlitzen über Antenne (A1) und Antenne (A2) empfangen werden, auf der Basis des Antennen-Diversityverfahrens (SVD) vorgesehen.

## Patentansprüche

1. Verfahren zum Senden und Empfangen von Daten, insbesondere auch von Sprachdaten in zellularen Funknetzen, bei dem eine Nachbarzellenbeobachtung durchgeführt wird,
**dadurch gekennzeichnet,**
**daß** die Funksignale (FA) der momentan der Verbindung zugeordneten Basisstation (BSA) durch einen Empfangsteil (EA) eines Kommunikationsendgerätes (KE) verarbeitet werden, und die Funksignale (FB) von den Basisstationen (BSB) der Nachbarzellen (NZ) zumindest zeitweise durch einen anderen Empfangsteil (EB) des Kommunikationsendgerätes (KE) verarbeitet werden.

2. Verfahren nach Anspruch 1,
**dadurch gekennzeichnet,**
**daß** Sende- und Empfangssignale des Kommunikationsendgerätes über eine Antenne (A1) übertragen werden und durch eine der Antenne (A1) nachgeschaltete Sende / Empfangsweiche (SE) voneinander getrennt werden.

3. Verfahren nach einem der Ansprüche 1 bis 2,
**dadurch gekennzeichnet,**
**daß** zumindest zeitweise die Funksignale (FA) von der momentan der Verbindung zugeordneten Basisstation (BSA) auch durch eine zusätzliche Antenne (A2) empfangen werden und auch durch den Empfangsteil (EB) des Kommunikationsendgerätes verarbeitet werden und eine weitere Signalverarbeitung auf der Basis des Antennen-Diversityverfahrens durchgeführt wird.

4. Kommunikationsendgerät zur Durchführung des Verfahrens nach Anspruch 1 mit
a) einer Antenne (A1)
b) einem Sendeteil (S)
c) einem Empfangsteil (EA) zur Verarbeitung der Funksignale (FA) der momentan der Verbindung zugeordneten Basisstation (BSA)
d) einem Empfangsteil (EB) zur Verarbeitung der Funksignale (FB) von den Basisstationen (BSB) der Nachbarzellen.
e) einem Signalverarbeitungsteil (SV)

5. Kommunikationsendgerät nach Anspruch 4 mit einer Sende / Empfangsweiche (SE) zur Trennung der Sende- und Empfangssignale des Kommunikationsendgerätes (KE).

6. Kommunikationsendgerät nach einem der Ansprüche 4 bis 5 mit
a) einer zusätzlichen Antenne (A2)
b) einem Signalverarbeitungsteil zur weiteren Signalverarbeitung auf der Basis des Antennen-Diversityverfahrens (SVD).

## Claims

1. Method for transmitting and receiving data, in particular also voice data in cellular radio networks, wherein adjacent cell monitoring is performed,
**characterised in that**
the radio signals (FA) of the base station (BSA) currently assigned to the connection are processed by means of a receiving component (EA) of a communication terminal (KE) and the radio signals (FB) of the base stations (BSB) of the adjacent cells (NZ) are processed at least occasionally by means of another receiving component (EB) of the communication terminal (KE).

2. Method according to claim 1,
**characterised in that**
the transmit and receive signals of the communication terminal are transmitted via an antenna (A1) and separated from one another by means of a transmitter/receiver duplexer (SE) connected downstream of the antenna.

3. Method according to one of claims 1 to 2,
**characterised in that**
the radio signals (FA) of the base station (BSA) currently assigned to the connection are also received at least occasionally by means of an additional antenna (A2) and also processed by the receiving component (EB) of the communication terminal, and further signal processing is performed on the basis of the antenna diversity method.

4. Communication terminal for performing the method according to claim 1, comprising
a) an antenna (A1)
b) a transmitting component (S)
c) a receiving component (EA) for processing the radio signals (FA) of the base station (BSA) currently assigned to the connection
d) a receiving component (EB) for processing the radio signals (FB) of the base stations (BSB) of the adjacent cells
e) a signal processing component (SV).

5. Communication terminal according to claim 4, comprising a transmitter/receiver duplexer (SE) for separating the transmit and receive signals of the communication terminal (KE).

6. Communication terminal according to one of claims 4 to 5, comprising
a) an additional antenna (A2)
b) a signal processing component for further signal processing on the basis of the antenna diversity method (SVD).

## Revendications

1. Procédé pour émettre et recevoir des données, notamment également des données vocales dans des réseaux radio cellulaires, dans lequel une observation de cellules voisines est réalisée,
**caractérisé en ce**
**que** les signaux radio (FA) de la station de base (BSA) affectée momentanément à la liaison sont traités par une partie réception (EA) d'un terminal de communication (KE), et les signaux radio (FB) des stations de base (BSB) des cellules voisines (NZ) sont traités, au moins temporairement, par une autre partie réception (EB) du terminal de communication (KE).

2. Procédé selon la revendication 1,
**caractérisé en ce**
**que** les signaux d'émission et de réception du terminal de communication sont transmis par l'intermédiaire d'une antenne (A1) et sont séparés les uns des autres par un séparateur d'émission / réception (SE) installé en aval de l'antenne (A1).

3. Procédé selon l'une quelconque des revendications 1 à 2,
**caractérisé en ce**
**que** les signaux radio (FA) de la station de base (BSA) affectée momentanément à la liaison sont également reçus, au moins temporairement, au moyen d'une antenne supplémentaire (A2) et sont également traités par la partie réception (EB) du terminal de communication et en ce qu'une poursuite du traitement des signaux est réalisée sur la base du procédé de diversité d'antenne.

4. Terminal de communication pour la réalisation du procédé selon la revendication 1, comprenant
a) une antenne (A1)
b) une partie émission (S)
c) une partie réception (EA) pour le traitement des signaux radio (FA) de la station de base (BSA) affectée momentanément à la liaison
d) une partie réception (EB) pour le traitement des signaux radio (FB) des stations de base (BSB) des cellules voisines
e) une partie de traitement des signaux (SV).

5. Terminal de communication selon la revendication 4, comprenant
un séparateur d'émission / réception (SE) pour la séparation des signaux d'émission et des signaux de réception du terminal de communication (KE).

6. Terminal de communication selon l'une quelconque des revendications 4 à 5, comprenant
a) une antenne supplémentaire (A2)
b) une partie de traitement de signaux pour la poursuite du traitement des signaux sur la base du procédé de diversité d'antenne (SVD) .
